# EUROPÄISCHE PATENTSCHRIFT

(11) **EP 0 408 697 B1**
(45) Veröffentlichungstag und Bekanntmachung des Hinweises auf die Patenterteilung: **27.10.1993**
(21) Anmeldenummer: 90900854.2
(22) Anmeldetag: 18.12.1989
(51) Int. Cl.: G03B 27/73

(54) **GERÄT ZUM PUNKTWEISEN AUSMESSEN VON FARBIGEN KOPIERVORLAGEN**
DEVICE FOR POINT-BY-POINT MEASUREMENT OF COLOURED ORIGINALS
APPAREIL DE MESURE POINT PAR POINT D'ORIGINAUX EN COULEURS

(30) Priorität: 29.12.1988 IT 672488
(43) Veröffentlichungstag der Anmeldung: 23.01.1991
(73) Patentinhaber: Durst Phototechnik GmbH, 39100 Bozen (IT)
(72) Erfinder: DELUEG, Verner, I-39040 Vahrn (IT)
(86) Internationale Anmeldenummer: EP8901559
(87) Internationale Veröffentlichungsnummer: WO9007728

(56) Entgegenhaltungen:
- DE-A- 3 706 657
- FR-A- 2 515 370
- US-A- 4 018 526

## Beschreibung

### Technisches Gebiet

Die Erfindung bezieht sich allgemein auf das Gebiet der Farbbelichtung von fotografischen Schichtträgern bei der Herstellung von Abzügen von einem Filmoriginal. Insbesondere betrifft die Erfindung eine Meßvorrichtung zum punktweisen Ausmessen von fotografischen Kopiervorlagen zum Zwecke der Bestimmung der Belichtungswerte beim Kopieren der Vorlage mittels eines fotografischen Vergrößerungs- oder Kopiergerätes.

### Stand der Technik

Beim fotografischen Kopieren ist es allgemein üblich, die einzelnen Vorlagen vor der Belichtung auf ihre Dichte und Farbverteilung auszumessen und aus den Meßergebnissen die erforderliche Belichtung für jede der drei Farbschichten des Kopiermaterials zu bestimmen, die zu einer farbrichtigen Wiedergabe der zu kopierenden Vorlage führt. Das dabei angewandte Verfahren beruht auf dem sogenannten Prinzip der Integration zu Grau, das davon ausgeht, daß sich die Farben einer Abbildung über die gesamte Abbildungsfläche zu Neutralgrau integrieren, weil die Aufnahmeszene typischerweise gleiche Anteile aller drei Grundfarben Rot, Grün und Blau enthält. Aufgrund dieses Prinzips bleibt in den Abzügen ein konstantes Farbgleichgewicht erhalten, wenn die Belichtung auf die Aufrechterhaltung eines konstanten Verhältnisses der Grundfarbenanteile im Kopierlicht abzielt.

Das Ausmessen einer zu kopierenden Vorlage beschränkt sich damit auf eine farbselektive Messung der integralen Durchlaßdichte in den Farben Rot, Grün und Blau und den Vergleich derselben mit jener einer Referenzvorlage, für welche die Belichtungswerte bereits festliegen, um in Abhängigkeit einer allfälligen Abweichung entsprechende Korrekturen der Belichtungswerte vorzunehmen. Die Vorgangsweise läuft praktisch darauf hinaus, für eine Reihe zu kopierender Vorlagen dasselbe Farbgleichgewicht herzustellen, das die Referenzvorlage aufweist.

Für die integrale Dichtemessung von Kopiervorlagen stehen Lichtmeßgeräte, gemeinhin Farbanalyser genannt, zur Verfügung, die vorwiegend in Verbindung mit fotografischen Vergrößerungs- oder Kopiergeräten Anwendung finden. Dabei wird zur Homogenisierung des Meßlichtes eine Streuscheibe in das die Vorlage durchscheinende Projektionslicht eingeführt und über eine farbselektive Meßsonde die Lichtintensität in den einzelnen Grundfarben in der Kopierebene gemessen.

Das integrale Meßverfahren hat den Vorteil der Einfachheit, weil die Meßeinrichtung, die dazu notwendig ist, relativ einfach und die Durchführung der Messung, insbesondere die Positionierung der Meßsonde, unkritisch ist. Die integrale Bewertung auf der Grundlage der mittleren Farbdichte der Vorlage erweist sich jedoch als unzulänglich für den Fall, daß die wiederzugebende Abbildung eine starke Farbdominante aufweist. In einem solchen Falle führt das Kriterium, im Abzug stets das Farbgleichgewicht der Referenzvorlage wiederherzustellen, in Wirklichkeit zu einer Verfälschung der Farbe der Kopie gegenüber dem Original. Die Integralmessung führt also, zumindest bei einem Teil der Kopiervorlagen, zu einer unbefriedigenden Farbwiedergabe, die eine Wiederholung der Belichtung mit entsprechend korrigierten Belichtungswerten erfordert. Das Ziel, mit dem Ausmessen der Vorlagen eine möglichst hohe Ausbeute an zufriedenstellenden Erstkopien zu erhalten, wird demnach nicht erreicht.

Aus der DE-A-3512744 ist ein fotometrischer Rotationssensor für durchscheinende Vorlagen bekannt, der eine punktweise Abtastung des Originals erlaubt. Auf der gekrümmten Mantelfläche eines Rotationszylinders, der gleichzeitig eine Drehbewegung und eine Linearbewegung ausführt,sind mehrere Lichtsensoren angebracht, denen das Meßlicht über Lichtleitstäbe, die bis an die Bildvorlage heranreichen, zugeführt wird. Die elektrischen Signale der Sensoren werden über Schleifringe am Rotationszylinder abgenommen und einer elektronischen Speicher- und Auswerteschaltung zugeführt, wobei über entsprechende Kodierelemente jedes in den Speicher gelangende Signal einem festen Meßpunkt auf der Vorlage zuordenbar ist. Die punktweise Ausmessung der gesamten Bildfläche ermöglicht eine genauere Erfassung der Farbverteilung in der Vorlage als die Integralmessung und führt bei Anwendung geeigneter Kriterien der Signalauswertung zu einer erhöhten Ausbeute an zufriedenstellenden Erstkopien. Die beschriebene Sensoreinrichtung mit der kombinierten Dreh- und Linearbewegung und dem Abgriff der Sensorsignale von einem rotierenden Sensorträger erweist sich relativ aufwendig und umständlich, insbesondere bei größerformatigen Vorlagen, wenn die Eintrittsflächen der Lichtleitstäbe in einer x-y-Bewegung über die Bildfläche bewegt werden.

Aus der FR-A-515370 ist weiters eine Vorrichtung zur Analyse von Farbnegativen bekannt, in welcher paralleles Licht einer Meßlichtquelle auf eine mehrere Reihen Löcher aufweisende Platte gerichtet ist, vor der eine Bildbühne mit dem zu analysierenden Negativ quer zu den Lochreihen verschiebbar ist. Von den einzelnen Löchern führen lichtaustrittseitig optische Verbindungen zu einer farbselektiven fotometrischen Einrichtung, die an eine Speicherstufe angeschlossen ist. Über eine Vorrichtung zur Positionserfassung wird eine Speicherung des aus jedem Loch einer Lochreihe hervorgehenden optischen Signals ausgelöst, wenn die Bildbühne auf ihrer Bahn bestimmte Positionen durchläuft. Auf diese Weise sind die gespeicherten Signale festen, über das Negativ verteilten Meßpunkten zugeordnet.

Bekannt sind auch sogenannte Videoanalyser, die mit einer eigenen Meßlichtquelle ausgestattet sind und von einer Vorlage ein positives Kontrollbild auf einem Bildschirm liefern. Sie ermöglichen eine direkte Beurteilung des visualisierten Bildes und die Einstellung der Bildfarbe durch geeignete Signalbeeinflussung. Dabei wird wieder eine Grundeichung bezüglich einer Referenzvorlage durchgeführt, um eine Aussage über die densitometrischen Differenzen der zu kopierenden Vorlage gegenüber der Referenzvorlage zu erhalten und daraus in einer nachgeschalteten Rechenvorrichtung die am Vergrößerungs- oder Kopiergerät vorzunehmenden Einstellungen zu berechnen. Mit einem derartigen Videoanalyser lassen sich hinsichtlich Ausbeute an befriedigenden Erstkopien in der Regel gute Ergebnisse erzielen. Die Komplexität des Systems und der damit verbundene hohe Kostenaufwand schränken jedoch dessen Anwendungsbereich erheblich ein.

### Offenbarung der Erfindung

Der Erfindung liegt die Aufgabe zugrunde, eine Analysiervorrichtung für Filmvorlagen zu schaffen, die eine hohe Ausbeute an befriedigenden Erstkopien erbringt und im Vergleich zu den bekannten Vorrichtungen geringeren technischen Aufwand bei entsprechend niedrigeren Herstellungskosten erforderlich macht. Diese Aufgabe wird gemäß Patentanspruch 1 bei einem Gerät der angegebenen Art mit einer eine Meßlichtquelle und einen Lichtkondensor aufweisenden Beleuchtungseinrichtung zum Ausleuchten der Vorlage, einer fotoelektrischen in einer Meßebene im Bereich der Vorlagenabbildung angeordneten Sensoreinrichtung zur farbselektiven Erfassung des die Vorlage durchscheinenden Meßlichtes und einer der Sensoreinrichtung nachgeschalteten Signalauswerteeinrichtung erfindungsgemäß dadurch gelöst, daß
- die Beleuchtungseinrichtung eine Fresnel-Linse in Vorlagennähe aufweist;
- ein Objektiv zur Abbildung der Vorlage in die Meßebene der Sensoreinrichtung sowie Farbfilter in den Farben Rot, Grün und Blau vorgesehen sind, die in Objektivnähe selektiv in den Strahlengang einführbar sind und
- die Sensoreinrichtung eine in der Meßebene geradlinig bewegbare Fotodiodenzeile aufweist.

Der Einsatz einer Kondensator-Lichtquelle und die zusätzliche Anordnung einer Fresnel-Linse nahe der Filmvorlage ergeben eine hohe Lichtkonzentration im Bereich der Vorlage, so daß eine Lampe begrenzter Leistung genügt, die Vorlage mit solcher Lichtstärke zu beleuchten, daß eine problemlose Messung des Durchlaßlichtes erfolgen kann. Dank der begrenzten Leistung der Lampe erübrigen sich besondere Kühlvorrichtungen. Darüber hinaus läßt sich mit der Kombination von Kondensator-Lichtquelle und Fresnel-Linse eine gleichförmige Ausleuchtung der Vorlage bei kurzem Lichtweg zwischen Lichtquelle und Vorlage erzielen, zugunsten einer einfachen und kompakten Bauform der Beleuchtungseinrichtung und des Gerätes selbst.

Auch hinsichtlich der Handhabung des Gerätes erweist sich die gerichtete Lichtführung als vorteilhaft, weil das Raumlicht in dem offenen Bereich zwischen Bildbühne und Meßkopf die Messung nicht beeinflußt, so daß trotz des freien Zugangs zur Bildbühne der Einsatz des Gerätes im Hellraum möglich ist. Zudem erzeugt das gerichtete Kondensorlicht geringen Blendeffekt.

Mit dem Einsatz einer Fotodiodenzeile, die sich über eine Seitenlänge der Vorlagenabbildung erstreckt, ist eine Abtastung der gesamten Vorlage mit einer Linearbewegung der Zeile in Richtung der anderen Seitenlänge möglich, was zu einer einfachen und kostengünstigen Konstruktion der Abtastvorrichtung führt. Vorzugsweise sind die Fotodioden als Einzeldioden zeilenförmig zusammen mit Bauteilen eines nachgeschalteten Verstärkerund Umschaltkreises auf einer Leiterplatte montiert, die in einer Ebene geradlinig bewegbar ist. Der Antrieb der Leiterplatte erfolgt vorzugsweise über einen Schrittmotor, derart daß die Fotodiodenzeile das projizierte Vorlagenbild in einer Anzahl aufeinanderfolgender Schritte überstreicht und die entstehenden Meßsignale eindeutig einem jeweiligen Meßpunkt zuordenbar sind.

Weitere Merkmale und vorteilhafte Ausgestaltungen der Erfindung ergeben sich aus den abhängigen Ansprüchen in Verbindung mit der nachfolgenden Beschreibung eines bevorzugten Ausführungsbeispiels anhand der beigefügten Zeichnungen.

### Kurze Beschreibung der Zeichnungen

Figur 1 ist eine schematische Darstellung des Meßgeräts gemäß der Erfindung;
Figur 2 ist eine Darstellung des Antriebs zur Linearbewegung einer fotoelektrischen Sensoreinrichtung des Gerätes nach Fig. 1.

### Bester Weg zur Ausführung der Erfindung

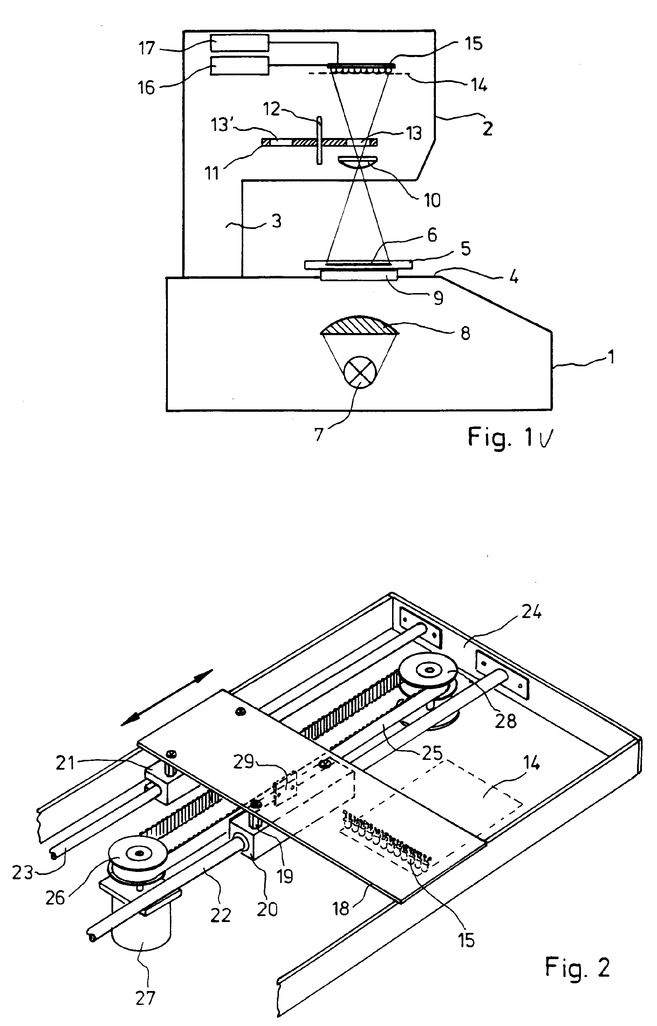

Wie Fig. 1 zeigt, umfaßt das erfindungsgemäße Gerät einen geschlossenen unteren Gehäuseteil 1, der eine Beleuchtungseinrichtung aufnimmt und einen oberen Teil 2 mit einer Einrichtung zur Lichtmessung. Beide Teile sind mit einem außermittigen Träger 3 miteinander verbunden, wobei die Anordnung so ist, daß der obere Teil als Lichtmeßkopf in Abstand vom unteren Gehäuseteil gehalten wird. Auf der dem Meßkopf zugewandten Seite weist der untere Gehäuseteil eine Arbeitsfläche 4 auf, in welcher eine Bildbühne 5 zur Aufnahme einer auszumessenden Filmvorlage 6 und weitere Bedienungselemente angeordnet sind. Vorzugsweise ist die Bildbühne abnehmbar, so daß Bildbühnen für unterschiedliche Filmformate untereinander austauschbar eingesetzt werden können. Der untere Gehäuseteil und der Meßkopf bilden zusammen eine bauliche Einheit, wobei zwischen beiden im Bereich der Bildbühnenaufnahme ein frei zugänglicher Arbeitsbereich besteht.

Die Beleuchtungseinrichtung im Innern des unteren Gehäuseteils 1 umfaßt eine Lichtquelle 7, einen Kondensor 8 und eine zusätzliche Stufenlinse (Fresnel-Linse) 9 in Nähe der Bildbühne, das Ganze in solcher Anordnung, daß die Filmvorlage in der Bildbühne gleichförmig ausgeleuchtet wird.

Im oberen Teil 2, dem eigentlichen Lichtmeßkopf, ist in Ausrichtung auf die mittige Normale der Bildbühne ein Objektiv 10 angeordnet, welches die in der Bildbühne befindliche Vorlage in einer Bildebene 14 scharf abbildet. Eine Filterscheibe 11 weist längs einer Kreislinie angeordnete Farbfilter 13, 13' und 13'' in den Farben Rot, Grün und Blau auf (von denen in der Zeichnung nur die Filter 13 und 13' sichtbar sind) und ist um eine fixe Achse 12 im Mittelpunkt der Kreislinie drehbar, derart daß die Farbfilter der Reihe nach einzeln in den Meßlichtstrahlengang in Nähe des Objektivs einführbar sind. Die Abbildung der Vorlage über ein optisches System mit der Anordnung der Meßfilter in Objektivnähe ist auch insofern vorteilhaft, als man dabei mit kleinflächigen Farbfiltern auskommt. Eine zeilenförmige fotoelektrische Sensoranordnung in Form einer Fotodiodenzeile 15 erstreckt sich in der Bildebene 14 über die Schmalseite der Abbildung und ist in Richtung Längsseite linear bewegbar, derart daß sie das gesamte Abbild der Vorlage überstreicht. Mit der Bezugsziffer 16 ist allgemein ein motorischer Antrieb für die Linearbewegung der Fotodiodenzeile und mit der Bezugsziffer 17 eine elektronische Signalauswerteschaltung zur Auswertung und Weiterverarbeitung der von den Fotodioden abgegebenen Lichtmeßsignale bezeichnet.

Die Fig. 2 zeigt in Alleinstellung und in gegenüber der Fig. 1 vergrößertem Maßstab den Antriebs- und Bewegungsmechanismus der Fotodiodenzeile 15 beim Abtasten der Meßfläche. Eine Anzahl von Fotodioden ist zeilenförmig auf einer Leiterplatte 18 montiert, die auch zumindest einen Teil der elektronischen Bauteile eines nachgeschalteten Verstärker- und Umschaltkreises aufnimmt (in der Figur nicht dargestellt). Die Leiterplatte 18 ist mittels Schraubverbindungen 19 an zwei Gleitbacken 20 und 21 befestigt, die an parallelen Führungen 22, 23 gleitend verschiebbar sind. Die Führungen 22, 23 werden an den Enden in einem Rahmen 24 gehalten, wobei die Anordnung der Führungen innerhalb des Rahmens und die Anordnung des Rahmen selbst im Innern des Meßkopfes so ist, daß die Leiterplatte 18 in einer zur Bildebene 14 parallelen Ebene normal zur Ausrichtung der Fotodiodenzeile bewegbar ist. Als Antrieb für die Linearbewegung der Leiterplatte mit der Fotodiodenzeile ist ein Schrittmotor 27 vorgesehen, auf dessen Welle eine Zahnscheibe 26 sitzt. Ein Zahnriemen 25 läuft über die Zahnscheibe 26 und eine Umlenkrolle 28 und erstreckt sich im Bereich der Leiterplatte, mit welcher er mittels einer Klemmverbindung 29 fest verbunden ist, parallel zu den Führungen 22, 23. Auf diese Weise ist die Fotodiodenzeile bei entsprechender Ansteuerung des Schrittmotors schrittweise über die Bildfläche bewegbar, wodurch die Filmvorlage ganzflächig abgetastet wird. Dabei wird die Diodenzeile zunächst von einer fixen Anfangsposition außerhalb des Meßfeldes auf die formatabhängige Meßfläche zubewegt, um aus der Wegstrecke bis zum Erreichen der beleuchteten Meßfläche das Format der vorliegenden Filmvorlage zu erkennen.

Bei der schrittweisen Bewegung der Fotodiodenzeile über die Bildlänge werden in den einzelnen Fotodioden fortlaufend Lichtmeßwerte erzeugt, die je einem bestimmten Meßpunkt auf der Vorlage zugeordnet sind. Zur Gewinnung getrennter Meßwerte für die rote, grüne und blaue Komponente des Meßlichtes wird die Vorlage dreimal mit der Diodenzeile abgetastet, wobei jeweils das rote, grüne oder blaue Farbfilter der Filterscheibe 11 (Fig. 1) in den Meßstrahlengang eingedreht wird. Die von den einzelnen Fotodioden nacheinander gelieferten Meßwerte werden in einer Speichervorrichtung der Signalauswerteschaltung gespeichert und nach einem vorherbestimmten Algorithmus rechnerisch in Belichtungswerte umgesetzt. Beim Gerät in der bevorzugten Ausführung beträgt die Anzahl der erfaßbaren Meßpunkte einer Vorlage beispielsweise 100 bis 130 je nach Vorlagenformat. Die Vielzahl der Lichtmeßwerte gibt die tatsächliche Farbverteilung in der zu kopierenden Vorlage wieder und ermöglicht somit eine bildspezifische Berechnung der Belichtungswerte.

Die Berechnung erfolgt mit Hilfe eines Mikroprozessorsystems, das auch die notwendigen Steuerfunktionen, einschließlich der Motorsteuerung für den Antrieb der Fotodiodenzeile übernimmt. Die errechneten Belichtungswerte werden auf einer Anzeigeeinrichtung digital angezeigt. Vorzugsweise weist das erfindungsgemäße Gerät zudem Schnittstellen für die Datenausgabe über Datendrucker, Strichcode-Drucker oder im Online-Betrieb in Verbindung mit vollautomatischen Vergrößerungsgeräten auf. Als eigenständiges Gerät konzipiert, kann es sowohl als Farbanalyser in der Dunkelkammer als auch als zentraler Meßplatz im Fotolabor eingesetzt werden.

## Patentansprüche

1. Meßgerät zum punktweisen Ausmessen von farbigen Kopiervorlagen (6) für die Ermittlung von Belichtungswerten, mit einer eine Meßlichtquelle (7) und einen Lichtkondensor (8) aufweisenden Beleuchtungseinrichtung zum Ausleuchten der Vorlage, einer fotoelektrischen in einer Meßebene (14) im Bereich der Vorlagenabbildung angeordneten Sensoreinrichtung (13 - 15) zur farbselektiven Erfassung des die Vorlage durchscheinenden Meßlichts und einer der Sensoreinrichtung nachgeschalteten Signalauswerteeinrichtung (17), dadurch gekennzeichnet, daß
- die Beleuchtungseinrichtung eine Fresnel-Linse (9) in Vorlagennähe aufweist;
- ein Objektiv zur Abbildung der Vorlage (6) in die Meßebene (14) der Sensoreinrichtung sowie Farbfilter (13) in den Farben Rot, Grün und Blau vorgesehen sind, die in Objektivnähe selektiv in den Strahlengang einführbar sind und
- die Sensoreinheit eine in der Meßebene (14) geradlinig bewegbare Fotodiodenzeile (15) aufweist.

2. Meßgerät nach Anspruch 1, dadurch gekennzeichnet, daß die Fotodiodenzeile (15) Teil einer mit elektronischen Bauteilen bestückten Leiterplatte (18) ist, die in einer zur Meßebene (14) parallelen Ebene geradlinig geführt und motorisch bewegbar ist.

3. Meßgerät nach Anspruch 2, dadurch gekennzeichnet, daß der motorische Antrieb einen Schrittmotor (27) umfaßt, mittels welchem die Fotodiodenzeile (15) in einer Anzahl von Schritten definierter Länge über die Vorlagenabbildung bewegbar ist.

4. Meßgerät nach Anspruch 3, dadurch gekennzeichnet, daß eine Steuerung so vorgesehen ist, daß die Meßwertaufnahme in einem selbsttätig ablaufenden Meßzyklus erfolgt, innerhalb welchem die Fotodiodenzeile (15) die Vorlagenabbildung aufeinanderfolgend dreimal überstreicht, wobei jeweils das rote, grüne oder blaue Farbfilter (13, 13', 13'') in den Meßstrahlengang eingeführt wird und die einzelnen Meßwerte getrennt nach Farbzugehörigkeit und in Zuordnung zum jeweiligen Meßpunkt für die Auswertung gespeichert werden.

5. Meßgerät nach Anspruch 3, dadurch gekennzeichnet, daß es Sensormittel zur Formaterkennung der Vorlage aufweist.

6. Meßgerät nach Anspruch 1, dadurch gekennzeichnet, daß der äußere Aufbau einen geschlossenen unteren Gehäuseteil (1) und einen in Abstand darüber gehaltenen Lichtmeßkopf (2) aufweist, die zusammen eine bauliche Einheit bilden, wobei der untere Gehäuseteil die Beleuchtungseinrichtung (7 - 9) und der Lichtmeßkopf die bewegliche fotoelektrische Sensoreinrichtung aufnimmt, und daß zwischen beiden ein frei zugänglicher Arbeitsbereich mit einer Aufnahmevorrichtung (5) für die zu messende Vorlage (6) besteht.

## Claims

1. Measuring device for the point-by-point measurement of coloured copying originals (6) to determine exposure values, having an illuminating device which comprises a source of measuring light (7) and a light condenser (8) for illuminating the original, a photoelectric sensor device (13 - 15) arranged in a measuring plane (14) in the region of the image of the original for the colour-selective detection of the measuring light shining through the original, and a signal evaluating device (17) arranged downstream of the sensor device, characterised in that
- the illuminating device has a Fresnel lens (9) near the original;
- a lens for imaging the original (6) into the measuring plane (14) of the sensor device and colour filters (13) in the colours red, green and blue which can be selectively inserted into the beam path near the lens are provided and
- the sensor unit has a row of photodiodes (15) which is movable in a straight line in the measuring plane (14).

2. Measuring device according to claim 1, characterised in that the row of photodiodes (15) is part of a printed circuit board (18) having electronic components assembled thereon which is guided in a straight line in a plane parallel to the measuring plane (14) and is movable by means of a motor.

3. Measuring device according to claim 2, characterised in that the motor drive includes a stepping motor (27) by means of which the row of photodiodes (15) is movable over the image of the original in a number of steps of defined length.

4. Measuring device according to claim 3, characterised in that a control is provided such that the recording of the measurements takes place in a measuring cycle which proceeds automatically and within which the row of photodiodes (15) passes over the image of the original three times in succession, the red, green or blue colour filter (13, 13', 13'') being respectively inserted into the measuring beam path and the individual measurements being stored separately according to the colour to which they belong and in association with the respective measuring point.

5. Measuring device according to claim 3, characterised in that it has sensor means for recognising the format of the original.

6. Measuring device according to claim 1, characterised in that the external construction comprises a closed, lower housing part (1) and a light measuring head (2) held above it and spaced from it which together form of structural unit, the lower housing part housing the illuminating device (7 - 9) and the light measuring head housing the movable photoelectric sensor device and, between the two, there is a freely accessible working area having an arrangement (5) for receiving the original (6) to be measured.

## Revendications

1. Appareil de mesure destiné à la mesure point par point d'originaux en couleurs à tirer (6), pour le calcul de valeurs d'éclairage, comprenant une source de lumière de mesure (7) et un condenseur de lumière (8) pour éclairer l'original, un dispositif capteur photo-électrique (13, 15) placé dans un plan de mesure (14) dans la région de la formation de l'image de l'original, et destiné à capter avec sélection chromatique la lumière de mesure qui traverse l'original et un dispositif d'analyse des signaux (17) placé en aval du dispositif capteur, caractérisé en ce que :
- le dispositif d'éclairage comprend une lentille de Fresnel (9) à proximité de l'original ;
- un objectif pour la formation de I'image de l'original (6) dans le plan de mesure (14) du dispositif capteur, ainsi que des filtres colorés (13) dans les couleurs rouge, vert et bleu, peuvent être intercalés sélectivement sur le trajet du faisceau lumineux à proximité de l'objectif, et
- le dispositif capteur présente une ligne de photodiodes (15) qui peut se déplacer en ligne droite dans le plan de mesure (14).

2. Appareil de mesure selon la revendication 1, caractérisé en ce que la ligne de photodiodes (15) fait partie d'un circuit imprimé (18) équipé de composants électroniques, qui est guidé pour se déplacer en ligne droite dans un plan parallèle au plan de mesure (14) et qui peut être entraîné par moteur.

3. Appareil de mesure selon la revendication 2, caractérisé en ce que l'entraînement par moteur comprend un moteur pas-à-pas (27) au moyen duquel la ligne de photodiodes (15) peut se déplacer au-dessus de l'image projetée de l'original, selon une longueur définie par un nombre de pas.

4. Appareil de mesure selon la revendication 3, caractérisé en ce qu'une commande est prévue de telle manière que la prise des valeurs de mesure s'effectue dans un cycle de mesure qui se déroule automatiquent, à l'intérieur duquel la ligne de photodiodes (15) balaye trois fois successivement l'image formée de l'original, le filtre coloré rouge, vert ou bleu (13, 13', 13'') étant à chaque fois intercalé sur le trajet des rayons de mesure et les différentes valeurs de mesure étant mémorisées, selon leur appartenance à une couleur et en association avec le point de mesure correspondant, pour l'analyse.

5. Appareil de mesure selon la revendication 3, caractérisé en ce qu'il comprend des moyens capteurs pour l'identification du format de l'original.

6. Appareil de mesure selon la revendication 1, caractérisé en ce que la construction extérieure comprend une partie inférieure de boîtier (1) fermée et une tête (2) de mesure de la lumière placée à distance de cette partie inférieure, qui forment ensemble une unité de construction, la partie inférieure du boîtier renfermant le dispositif d'éclairage (7 à 9) et la tête de mesure de la lumière renfermant le dispositif capteur photo-électrique mobile, et en ce qu'entre les deux parties, subsiste une zone de travail librement accessible, équipée d'un dispositif récepteur (5) pour contenir l'original (6) qu'il s'agit de mesurer.
